(19) Europäisches Patentamt
European Patent Office
Office européen des brevets

(11) **EP 4 456 235 A1**

# (12) EUROPEAN PATENT APPLICATION
published in accordance with Art. 153(4) EPC

(43) Date of publication:
**30.10.2024 Bulletin 2024/44**

(21) Application number: **23816373.7**

(22) Date of filing: **31.05.2023**

(51) International Patent Classification (IPC):
**H01M 10/056** (2010.01) **H01M 10/052** (2010.01)

(52) Cooperative Patent Classification (CPC):
**H01M 10/052; H01M 10/056;** Y02E 60/10

(86) International application number:
**PCT/KR2023/007474**

(87) International publication number:
**WO 2023/234713 (07.12.2023 Gazette 2023/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.05.2022 KR 20220067013**

(71) Applicant: **LG Energy Solution, Ltd.**
**Seoul 07335 (KR)**

(72) Inventors:
- **NAM, Sunghyun**
  **Daejeon 34122 (KR)**
- **HAN, Hyeaeun**
  **Daejeon 34122 (KR)**
- **LEE, Jung Pil**
  **Daejeon 34122 (KR)**
- **KIM, Dong Kyu**
  **Daejeon 34122 (KR)**

(74) Representative: **Hoffmann Eitle**
**Patent- und Rechtsanwälte PartmbB**
**Arabellastraße 30**
**81925 München (DE)**

(54) **COMPOSITE SOLID ELECTROLYTE FOR LITHIUM SECONDARY BATTERY AND METHOD FOR PREPARING SAME**

(57) The present invention relates to a composite solid electrolyte for a lithium secondary battery and a method for preparing same. The composite solid electrolyte according to the present invention can effectively improve the ionic conduction of lithium ions by forming a ceramic ionic conductor containing a ceramic compound.

【Figure 2】

Example 1     Example 2

Ion conductor

EP 4 456 235 A1

**Description**

[Technical Field]

This application claims the benefits of priorities based on Korean Patent Application No. 10-2022-0067013 filed on May 31, 2022 and Korean Patent Application No. 10-2023-0070195 filed on May 31, 2023, the entire contents of which are incorporated as part of this specification.

The present invention relates to a composite solid electrolyte for a lithium secondary battery and a preparation method thereof.

[Background Art]

Since a lithium-ion battery using a liquid electrolyte has a structure in which the negative electrode and the positive electrode are partitioned by a separator, if the separator is damaged by deformation or external impact, a short circuit may occur, which may lead to dangers such as overheating or explosion. Therefore, it can be said that the development of a solid electrolyte that can secure safety in the field of the lithium-ion secondary battery is a very important task.

A lithium secondary battery using a solid electrolyte has the advantages of increasing the safety of the battery, preventing leakage of the electrolyte solution, improving the reliability of the battery, and making it easy to manufacture a thin battery. In addition, since lithium metal can be used as a negative electrode, energy density can be improved, and thus it is expected to be applied to high-capacity secondary batteries for electric vehicles, in addition to small secondary batteries, and is in the limelight as a next-generation battery.

Among the solid electrolytes, a polymer solid electrolyte may use a polymer material made of an ion conductive material or an inorganic material such as an oxide or sulfide having ion conductive properties, and a composite solid electrolyte in which polymer materials and inorganic materials are mixed is also proposed.

Such a conventional composite solid electrolyte was prepared by preparing a solution or slurry in which a polymer and an inorganic material were mixed and dispersed, and then casting the solution on a substrate by solution casting and drying it at a high temperature. However, the conventional preparation technology of the composite solid electrolyte has a limitation that it is difficult to prepare the composite solid electrolyte with improved ionic conductivity due to the formation of non-uniform distribution of inorganic particles in the composite solid electrolyte because the uniform dispersion of inorganic materials in the polymer solution is not smooth.

In order to overcome these limitations of conventional composite solid electrolytes, there is a demand for technology development capable of improving the ionic conductivity of a composite solid electrolyte including a polymer and an inorganic material uniformly dispersed therein.

[Prior Art Document]

[Patent Document]

(Patent Document 1) Korean Laid-open Patent Publication No. 10-2017-0045011

[Disclosure]

[Technical Problem]

It is an object of the present invention to provide a composite solid electrolyte with improved ionic conductivity.

It is another object of the present invention to provide a method for preparing a composite solid electrolyte with improved ionic conductivity.

It is still another object of the present invention to provide an all-solid-state battery including a composite solid electrolyte with improved ionic conductivity.

[Technical Solution]

In order to achieve the above objects, the present invention provides a method for preparing a composite solid electrolyte for a lithium secondary battery comprising the steps of (S1) preparing a first composite by forming a hydrogel of a first polymer from a solution including the first polymer including a cross-linkable functional group (side chain) and a ceramic compound; (S2) preparing a ceramic ion conductor by sintering the first composite; and (S3) preparing a second composite by immersing the ceramic ion conductor in a solution including the second polymer and a lithium salt and drying it.

The present invention provides a composite solid electrolyte for a lithium secondary battery comprising a ceramic ion conductor including a ceramic compound; a second polymer; and a lithium salt, wherein the ceramic ion conductor comprises a cross-linked structure including the ceramic compound.

The present invention also provides an all-solid-state battery comprising the composite solid electrolyte for the lithium secondary battery.

[Advantageous Effects]

The composite solid electrolyte according to the present invention can effectively improve ion conduction of lithium ions by forming a ceramic ion conductor including a ceramic compound.

[Description of Drawings]

FIG. 1 is an image obtained by photographing a polymer hydrogel according to an embodiment of the present invention.

FIG. 2 is an image obtained by photographing a ceramic ion conductor formed after sintering a polymer hydrogel according to an embodiment of the present invention.

FIG. 3 is a photograph obtained by taking a powder of a ceramic compound (Pristine LLZO) according to an embodiment of the present invention using a Scanning Electron Microscope (SEM).

FIG. 4 is a photograph obtained by taking a ceramic ion conductor according to an embodiment of the present invention using a Scanning Electron Microscope (SEM).

FIG. 5 is an image obtained by photographing a polymer hydrogel according to an embodiment of the present invention.

FIG. 6 is an image obtained by photographing a ceramic ion conductor according to an embodiment of the present invention.

FIG. 7 is an image obtained by photographing a ceramic ion conductor according to Comparative Example 1.

[Best Mode]

Hereinafter, the present invention will be described in more detail to aid understanding of the present invention.

The terms and words used in the present specification and claims should not be construed as limited to ordinary or dictionary terms, and should be construed in a sense and concept consistent with the technical idea of the present invention, based on the principle that the inventor can properly define the concept of a term to describe his invention in the best way possible.

**Preparation method of composite solid electrolyte for lithium secondary battery**

A method for preparing a composite solid electrolyte according to an embodiment of the present invention may comprise the following steps:

(S1) preparing a first composite by forming a hydrogel of a first polymer from a solution including the first polymer including a cross-linkable functional group (side chain) and a ceramic compound;

(S2) preparing a ceramic ion conductor by sintering the first composite; and

(S3) preparing a second composite by immersing the ceramic ion conductor in a solution including the second polymer and a lithium salt and drying it.

In the preparation method of the composite solid electrolyte, the ceramic compound may be uniformly dispersed in the first polymer solution, by preparing a hydrogel of a first polymer from a solution including the first polymer and a ceramic compound. In addition, by preparing a ceramic ion conductor using the hydrogel of the first polymer, it is possible to improve the ion conduction of lithium ions and prepare a composite solid electrolyte with improved ion conductivity.

Hereinafter, the preparation method of the composite solid electrolyte according to the present invention will be described in detail for each step.

In the present invention, in the step (S1), it is possible to prepare a first composite by forming a hydrogel of a first polymer from a solution including the first polymer including a cross-linkable functional group (side chain) and a ceramic compound.

The first composite may be prepared through hydrogelation of the first polymer.

The conventional composite solid electrolyte was prepared as a film of the final composite solid electrolyte by preparing a solution in which a polymer and an inorganic material are mixed and dispersed, and then coating the solution on a substrate by a method such as solution casting, and then going through a drying process. However, since the inorganic materials are not uniformly dispersed in the polymer solution, resulting in non-uniform distribution of inorganic particles in the film of the final composite solid electrolyte, this composite solid electrolyte had a problem of low ionic conductivity.

Accordingly, the inventors of the present invention efficiently prepared a ceramic ion conductor and completed a composite solid electrolyte with improved ionic conductivity by uniformly dispersing the particles of the ceramic compound in the first composite through hydrogelation of the first polymer and sintering the first composite.

The hydrogelation of the first polymer may comprise physical cross-linkage or chemical cross-linkage of the first polymer, and the physical cross-linkage or chemical cross-linkage may include a cross-linked structure between the ceramic compound and the first polymer including a cross-linkable functional group.

In the present invention, the cross-linked structure may comprise the (a) cross-linkage between cross-linkable functional groups, and the (b) cross-linkage between cross-linkable functional groups and ceramic compounds.

The (a) cross-linkage between cross-linkable functional groups may comprise a hydrogen bond between cross-linkable functional groups, and for example, the hydrogen bond may be a hydrogen bond between OH- groups.

The (b) cross-linkage between cross-linkable functional groups and ceramic compounds may comprise a linkage by a Lewis acid-base interaction, and for example, the linkage may be a linkage between an -OH group and Li. The (b) cross-linkage between cross-linkable functional groups and ceramic compounds is a linkage by a Lewis acid-base interaction, which may be a type of cross-linkage such as a metal-ligand linkage.

In addition, the (b) cross-linkage between cross-linkable functional groups and ceramic compounds prevents aggregation between particles of the ceramic compound and allows the particles of the ceramic compound to be uniformly dispersed in the hydrogel and thus forms a hydrogel of the first polymer to prepare a first composite, and the ionic conductivity of the composite solid electrolyte can be improved through the ceramic ion conductor prepared by sintering the first composite.

Due to the cross-linked structure, the mobility of lithium ions inside the electrolyte is improved, and thus a composite solid electrolyte with improved ionic conductivity can be provided.

In the present invention, the cross-linkable functional group included in the first polymer may have a property of forming a cross-linked structure by forming linkages as in (a) and (b) above.

For example, the cross-linkable functional group may include one or more selected from the group consisting of a hydroxyl group, a carboxyl group, and an amide group.

In addition, the weight average molecular weight (Mw) of the polymer including the cross-linkable functional group may be 80,000 g/mol to 130,000 g/mol, and specifically, may be 80,000 g/mol or more, 83,000 g/mol or more or 85,000 g/mol or more, and 90,000 g/mol or less, 110,000 g/mol or less or 130,000 g/mol or less. If the weight average molecular weight (Mw) of the polymer including the cross-linkable functional group is less than 80,000 g/mol, the linkage by the cross-linkable functional group may not be sufficiently formed to obtain a cross-linked structure. If the weight average molecular weight (Mw) of the polymer including the cross-linkable functional group exceeds 130,000 g/mol, the entanglement of the polymer chain is increased in the polymer solution used in the preparation process, and the penetration rate of the solvent into the polymer chain is decreased. Accordingly, gelation of the polymer is accelerated, the solubility of the polymer is lowered, the bonding by the cross-linkable functional group cannot be performed smoothly, and thus the formation of a cross-linked structure may not be easy.

In addition, the first polymer including the cross-linkable functional group may comprise at least one selected from the group consisting of polyvinyl alcohol (PVA), gelatin, methylcellulose, agar, dextran, poly(vinyl pyrrolidone), poly(acryl amide), poly(acrylic acid)(PAA), starch-carboxymethyl cellulose, hyaluronic acid-methylcellulose, chitosan, poly(N-isopropylacrylamide) and amino-terminated polyethylene glycol (amino-terminated PEG). Preferably, the polymer including the cross-linkable functional group may be PVA, and the PVA can be efficiently phase separated from the solvent upon freezing in the preparation process of the composite solid electrolyte, and it may be advantageous to form a cross-linked structure by the linkages (a) and (b) induced from the cross-linkable functional group of PVA phase separated from the solvent.

In one embodiment of the present invention, the cross-linked structure may be formed by freezing and thawing the solution including the first polymer and the ceramic compound.

In the freezing process, the first polymer and water included in the aqueous solution of the polymer including the cross-linkable functional group may be phase separated. The phase separation may be induced because the strength of the hydrogen bond between the water molecules is stronger than that between the cross-linkable functional group and the water molecules. Water molecules aggregated by hydrogen bonds between the water molecules exist in the ice phase by a freezing process. As a result, the number of cross-linkable functional groups forming hydrogen bonds through interaction with the water molecules is significantly reduced.

Due to the phase separation, the inside of the hydrogel is divided into (i) a polymer-poor phase and (ii) a polymer-rich phase.

The (i) polymer-poor phase is a portion including water molecules aggregated by hydrogen bonds between water molecules and exists as an ice phase, which can also be referred to as a free water state.

The (ii) polymer-rich phase is a portion including a polymer phase separated from water. The phase-separated polymer is a polymer including a cross-linkable functional group that is free from interaction with water molecules, and is in a free state after phase separation, and does not form crystals by regular folding, and exists in an amorphous state with relatively free behavior, which is called an amorphous polymer chain.

In addition, some of the cross-linkable functional groups included in the phase separated polymer form localized crystallites. The localized crystallites act as a cross-linkable junction point to form a cross-linked structure including the linkages (a) and (b).

In addition, in the thawing process after the freezing process, the ice included in the (i) polymer-poor phase melts and evaporates, and thus a composite solid electrolyte with an increased free volume can be prepared.

In addition, the freezing may be performed by appropriately selecting conditions sufficient to freeze the hydrogel. For example, the freezing temperature may be performed at a temperature of -30 °C to -10 °C, and specifically, the freezing temperature may be -30 °C or higher, -25 °C or higher, or -23 °C or higher, and may be -18 °C, -15 °C or lower or -10 °C or lower. If the freezing temperature is less than - 30 °C, cracks may occur in the hydrogel. If the freezing temperature exceeds -10 °C, formation of regions of amorphous polymer chains can be difficult because sufficient phase separation between the polymer and water is not achieved. In addition, the freezing may be performed in consideration of a sufficient freezing time within the range of 20 hours to 30 hours.

In addition, the thawing can be performed by appropriately selecting conditions capable of thawing to the extent that the frozen hydrogel can be applied as a composite solid electrolyte. For example, the thawing temperature may be 15 °C to 35 °C or may be room temperature (25 °C). If the thawing temperature is less than 15 °C, moisture drying efficiency may decrease after thawing (ice melting). If the thawing temperature exceeds 35 °C, the hydrogel may shrink and thus cause wrinkles or warping.

In one embodiment of the present invention, the cross-linked structure may be formed by adding a chemical cross-linker to the solution including the first polymer and the ceramic compound.

The cross-linked structure may be formed by chemical cross-linking using a chemical cross-linker in addition to formation by physical cross-linking through the afore-mentioned freezing and thawing processes.

The cross-linkage comprising the first polymer may include a chemical cross-linkage, and the chemical cross-linkage may form a cross-linked structure by forming a cross-linking between the first polymer including a cross-linkable functional group and a ceramic compound by a chemical cross-linker.

In the cross-linkage comprising the first polymer, the chemical cross-linkage may be performed by adding a chemical cross-linker to the mixed solution including the first polymer and the ceramic compound to form a chemical cross-linkage of the first polymer.

The chemical cross-linker may form a linkage between the first polymers including the cross-linkable functional group or a linkage between the first polymer including the cross-linkable functional group and the ceramic compound.

The chemical cross-linker may include at least one selected from the group consisting of boric acid, glutaraldehyde, inorganic salts and metal salts, but is not limited to these examples, and any chemical cross-linker that forms the hydrogel of the first polymer is possible.

In the first composite, the ceramic compound may be contained in an amount of 1 part by weight or more to less than 10 parts by weight based on 1 part by weight of the first polymer. More specifically, the weight ratio of the first polymer and the ceramic compound may be 1: 1, 1: 2, 1: 3, 1: 4, 1: 5, 1: 6, 1: 7, 1: 8 or 1: 9. If the ceramic compound is contained in an amount of less than 1 part by weight with respect to 1 part by weight of the first polymer, there is a problem that after the sintering process in step (S2) below, it is difficult to form a ceramic ion conductor with a cross-linked structure because the bonding between ceramic compounds is not smooth, and the mechanical properties are also weak and thus it is easily crumbled or destroyed, making the preparation of composite solid electrolyte impossible. In addition, if the ceramic compound is contained in an amount exceeding 10 parts by weight based on 1 part by weight of the first polymer, there is a problem that since the ceramic compound is not uniformly dispersed in the first polymer, a phenomenon in which the particles of the ceramic compound agglomerate and aggregate occurs, and a phase separation occurs between the first polymer and the agglomerated ceramic compound particles, making it difficult to form a ceramic ion conductor and thus resulting in a problem in that a composite solid electrolyte with reduced ionic conductivity is prepared.

In the present invention, in the step (S2), a ceramic ion conductor may be prepared by sintering the first composite.

As used herein, the term "sintering" refers to a process of applying sufficient temperature and pressure to make the first composite into a lump of harder particles.

The ceramic ion conductor may be prepared by sintering the first composite to thermally decompose the hydrogel of the first polymer and sintering particles of the remaining ceramic compound.

Through the sintering process, the hydrogel of the first polymer plays a role as a support so that the particles of the ceramic compound can be connected to each other, and the particles of the ceramic compound may be connected to each other to form a ceramic ion conductor having a cross-linked structure.

The ceramic ion conductor may play a role of forming an ion conduction path of lithium ions.

The sintering may be performed by properly selecting conditions sufficient to thermally decompose the hydrogel of the first polymer and to form an ion conductor of a cross-linked structure by connecting the structure of the particles of the ceramic compound to each other. For example, the sintering temperature may be performed at a temperature of 800 °C to 1300 °C, specifically, the sintering temperature may be 850 °C or more, 900 °C or more, 950 °C or more, and may be 1300 °C or less, 1250 °C or less, 1200 °C or less.

In the present invention, in the step (S3), it is possible to prepare a second composite by immersing the ceramic ion conductor in a solution including the second polymer and a lithium salt and drying it.

Since the second composite includes the ceramic ion conductor, a composite solid electrolyte with improved ionic conductivity can be prepared.

The second polymer may be a polymer having excellent solubility for the lithium salt and allowing the polymer solution to permeate well into the ceramic ion conductor so that preparation of the final composite solid electrolyte is easy. Specific examples of the second polymer may include at least one selected from the group consisting of polyvinyl alcohol (PVA), polyethylene oxide (PEO), polyacrylate, poly(methyl methacrylate) (PMMA), PSTFSI, polyurethane, nylon, poly(dimethylsiloxane), gelatin, methylcellulose, agar, dextran, poly(vinyl pyrrolidone), poly(acryl amide), poly(acrylic acid), starch-carboxymethyl cellulose, hyaluronic acid-methylcellulose, chitosan, poly(N-isopropylacrylamide), and amino-terminated PEG.

In the present invention, the lithium salt is comprised in a dissociated state inside the structure formed by the ceramic ion conductor to improve the ionic conductivity of the composite solid electrolyte. In addition, the lithium salt is mainly dissociated inside the second polymer, and in the step (S2), it can play a role of compensating for the loss of lithium ions generated from the particles of the ceramic compound during the high-temperature sintering process.

The lithium salt may include at least one selected from the group consisting of $(CF_3SO_2)_2NLi$ (Lithium bis(trifluoromethanesulphonyl)imide, LiTFSI), $(FSO_2)_2NLi$ (Lithium bis(fluorosulfonyl)imide, LiFSI), $LiNO_3$, LiOH, LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $CF_3SO_3Li$, LiSCN, and LiC$(CF_3SO_2)_3$.

The ceramic ion conductor prepared in the step (S2) is immersed in a solution including the second polymer and lithium salt, coated, and then dried to prepare the second composite. The immersion or coating and drying may be repeated a plurality of times.

The molar ratio ([Li]/[G]) of molar concentration ([G]) of the second polymer and the lithium ([Li]) in the lithium salt may be 0.1 to 0.5, specifically 0.1 or more, 0.2 or more, or 0.3 or more, and may be 0.4 or less or 0.5 or less. If the molar ratio ([Li]/[G]) is less than 0.1, the content of the lithium salt is reduced, and the ionic conductivity of the composite solid electrolyte may be lowered, and if the molar ratio ([Li]/[G]) exceeds 0.5, the ionic conductivity may decrease due to aggregation of lithium ions. Therefore, the composite solid electrolyte according to the present invention requires the composition of the second polymer and an appropriate amount of lithium salt in the second composite.

**Composite solid electrolyte for lithium secondary battery**

The composite solid electrolyte for the lithium secondary battery according to the present invention includes a ceramic ion conductor including a ceramic compound; a second polymer; and a lithium salt, wherein the ceramic ion conductor may include a cross-linked structure comprising the ceramic compound.

A conventional composite solid electrolyte was prepared by coating a solution or slurry, in which a polymer and an inorganic material were mixed and dispersed, on a substrate by a method such as a solution casting, and drying it. However, this method had a problem that the ionic conductivity of the solid electrolyte is not improved due to the non-uniform dispersion and precipitation of the inorganic materials in the polymer solution.

In order to improve this, the present invention intends to provide a composite solid electrolyte comprising a ceramic ion conductor including a cross-linked structure forming an ion conduction path of lithium ions, a polymer and a lithium salt. The ceramic ion conductor can play a role of improving the ionic conductivity of the composite solid electrolyte by uniformly dispersing particles of the ceramic compound therein.

The ceramic compound may be an oxide-based or phosphate-based solid electrolyte. The oxide-based or phosphate-based solid electrolyte may be at least one from the group consisting of a Garnet type lithium-lanthanum-zirconium oxide based compound (LLZO, $Li_7La_3Zr_2O_{12}$), perovskite type lithium-lanthanum-titanium oxide based compound (LLTO, $Li_{3x}La_{2/3-x}TiO_3$), NASICON type lithium-aluminum-titanium phosphate based compound of phosphate system (LATP, $Li_{1+x}Al_xTi_{2-x}(PO_4)_3$), lithium-aluminum-germanium phosphate based compound (LAGP, $Li_{1.5}Al_{0.5}Ge_{1.5}(PO_4)_3$), lithium-silicon-titanium phosphate based compound (LSTP, $LiSiO_2TiO_2(PO_4)_3$) and lithium-lan-

thanum-zirconium-titanium oxide based compound (LLZTO). The oxide-based or phosphate-based solid electrolyte requires a sintering process at 1000 °C or higher because the grain boundary resistance is very high. Due to this, there are problems such as volatilization of lithium at high temperature, phase transition, and formation of impurity phases. However, the oxide-based or phosphate-based solid electrolyte generally has an ionic conductivity value of up to $10^{-4}$ ~ $10^{-3}$ S/cm at room temperature, is stable in a high voltage region, and is stable in air, and thus it has the advantage of being easy to synthesize and handle.

Therefore, it is possible to compensate for the disadvantages of each material through the preparation of a hybrid solid electrolyte by mixing the first polymer and a heterogeneous material according to the present invention.

Since the oxide-based or phosphate-based solid electrolyte does not easily burn or cause ignition even under high temperature conditions of 400 °C or higher, high temperature stability is high. Therefore, if the ceramic ion conductor includes the oxide-based or phosphate-based solid electrolyte, the mechanical strength of the composite solid electrolyte for the lithium secondary battery as well as high temperature stability and ionic conductivity can be improved.

The second polymer and lithium salt are as described above.

In an embodiment of the present invention, the ceramic ion conductor may include a cross-linked structure including a ceramic compound.

The ceramic ion conductor may include one cross-linked structure formed by connecting particles of the ceramic compound to each other.

The ceramic ion conductor may play a role of forming an ion conduction path of lithium ions.

The specific preparation method of the ceramic ion conductor and the specific ceramic compound are as described above.

In the present invention, the composite solid electrolyte may be in the form of a free-standing film. The free-standing film means a film capable of maintaining a film shape by itself without a separate support at room temperature and normal pressure.

Since the free-standing film exhibits elasticity to minimize brittleness and has characteristics as a support that stably includes lithium ions, it may be in a suitable form as a composite solid electrolyte.

In the present invention, the ionic conductivity of the composite solid electrolyte may be $10^{-5}$ S/cm or more.

As described above, although the composite solid electrolyte is a solid electrolyte, it can improve the performance of an all-solid-state battery by exhibiting an ionic conductivity equivalent to or higher than that of conventional liquid electrolytes.

**All-solid-state battery**

The present invention also relates to an all-solid-state battery including the composite solid electrolyte, wherein the all-solid-state battery comprises a negative electrode, a positive electrode, and a composite solid electrolyte interposed between the negative electrode and the positive electrode, and the composite solid electrolyte has the above-described characteristics.

Specifically, since the composite solid electrolyte includes a ceramic ion conductor and thus improves ionic conduction of lithium ions, it may be suitable as an electrolyte for an all-solid-state battery.

In the present invention, the positive electrode included in the all-solid-state battery includes a positive electrode active material layer, and the positive electrode active material layer may be formed on one surface of the positive electrode current collector.

The positive electrode active material layer includes a positive electrode active material, a binder, and a conductive material.

In addition, the positive electrode active material is not particularly limited as long as it is a material capable of reversibly intercalating and de-intercalating lithium ions, and for example, may be, but is not limited to, layered compounds or compounds substituted with one or more transition metals, such as lithium cobalt oxide ($LiCoO_2$), lithium nickel oxide ($LiNiO_2$), $Li[Ni_xCo_yMn_zM_v]O_2$ (wherein, M is any one or two or more elements selected from the group consisting of Al, Ga and In; $0.3 \leq x < 1.0$, $0 \leq y$, $z \leq 0.5$, $0 \leq v \leq 0.1$, $x+y+z+v=1$), $Li(Li_aM_{b-a-b'}M'_{b'})O_{2-c}A_c$ (wherein, $0 \leq a \leq 0.2$, $0.6 \leq b \leq 1$, $0 \leq b' \leq 0.2$, $0 \leq c \leq 0.2$; M comprises Mn and at least one selected from the group consisting of Ni, Co, Fe, Cr, V, Cu, Zn and Ti; M' is at least one selected from the group consisting of Al, Mg and B, and A is at least one selected from the group consisting of P, F, S and N); lithium manganese oxide such as Formula $Li_{1+y}Mn_{2-y}O_4$ (wherein, y is 0 - 0.33), $LiMnO_3$, $LiMn_2O_3$, $LiMnO_2$; lithium copper oxide ($Li_2CuO_2$); vanadium oxide such as $LiV_3O_8$, $LiFe_3O_4$, $V_2O_5$, $Cu_2V_2O_7$; Ni site type lithium nickel oxide represented by Formula $LiNi_{1-y}MyO_2$ (wherein, M=Co, Mn, Al, Cu, Fe, Mg, B or Ga, y=0.01 - 0.3); lithium manganese composite oxide represented by Formula $LiMn_{2-y}M_yO_2$ (wherein, M=Co, Ni, Fe, Cr, Zn or Ta, y=0.01 - 0.1) or $Li_2Mn_3MO_8$ (wherein, M=Fe, Co, Ni, Cu or Zn); $LiMn_2O_4$ in which part of Li in the Formula is substituted with alkaline earth metal ions; disulfide compounds; and $Fe_2(MoO_4)_3$.

In addition, the positive electrode active material may be contained in an amount of 40 to 80% by weight based on the total weight of the positive electrode active material layer. Specifically, the content of the positive electrode active material may be 40% by weight or more or 50% by weight or more, and may be 70% by weight or less or 80% by weight or less. If the content of the positive electrode active material is less than 40% by weight, the connectivity between the wet positive electrode active material layer and the dry positive electrode active material layer may be insufficient. If the content of the positive electrode active material exceeds 80 % by weight, mass transfer resistance may be increased.

In addition, the binder is a component that assists bonding between the positive electrode active material and the conductive material, and assists in bonding to the current collector. The binder may comprise at least one selected from the group consisting of styrene-butadiene rubber, acrylated styrene-butadiene rubber, acrylonitrile copolymer, acrylonitrile-butadiene rubber, nitrile butadiene rubber, acrylonitrile-styrene-butadiene copolymer, acrylic rubber, butyl rubber, fluorine rubber, polytetrafluoroethylene, polyethylene, polypropylene, ethylene/propylene copolymer, polybutadiene, polyethylene oxide, chlorosulfonated polyethylene, polyvinylpyrrolidone, polyvinylpyridine, polyvinyl alcohol, polyvinyl acetate, polyepichlorohydrin, polyphosphazene, polyacrylonitrile, polystyrene, latex, acrylic resin, phenolic resin, epoxy resin, carboxymethylcellulose, hydroxypropyl cellulose, cellulose acetate, cellulose acetate butyrate, cellulose acetate propionate, cyanoethyl cellulose, cyanoethyl sucrose, polyester, polyamide, polyether, polyimide, polycarboxylate, polycarboxylic acid, polyacrylic acid, polyacrylate, lithium polyacrylate, polymethacrylic acid, polymethacrylate, polyacrylamide, polyurethane, polyvinylidene fluoride, and poly(vinylidene fluoride)-hexafluoropropene. Preferably, the binder may comprise at least one selected from the group consisting of styrene-butadiene rubber, polytetrafluoroethylene, carboxymethyl cellulose, polyacrylic acid, lithium polyacrylate, and polyvinylidene fluoride.

In addition, the binder may be contained in an amount of 1% by weight to 30% by weight based on the total weight of the positive electrode active material layer, and specifically, the content of the binder may be 1% by weight or more or 3% by weight or more, and may be 15% by weight or less or 30% by weight or less. If the content of the binder is less than 1% by weight, the adhesive force between the positive electrode active material and the positive electrode current collector may be lowered. If the content of the binder exceeds 30% by weight, the adhesive force is improved, but the content of the positive electrode active material is reduced by that amount, and thus the capacity of the battery may be lowered.

In addition, the conductive material is not particularly limited as long as it prevents side reactions in the internal environment of the all-solid-state battery and has excellent electrical conductivity without causing chemical changes in the battery. The conductive material may be typically graphite or conductive carbon, and for example, graphite such as natural graphite, artificial graphite; carbon black such as carbon black, acetylene black, Ketjen black, Denka black, thermal black, channel black, furnace black, lamp black, thermal black; carbon-based materials whose crystal structure is graphene or graphite; conductive fibers such as carbon fibers and metal fibers; carbon fluoride; metal powders such as aluminum powder and nickel powder; conductive whiskers such as zinc oxide and potassium titanate; conductive oxides such as titanium oxide; and conductive polymers such as polyphenylene derivatives may be used alone or in combination of two or more thereof as the conductive material, but is not necessarily limited thereto.

The conductive material may be generally contained in an amount of 0.5% by weight to 30% by weight based on the total weight of the positive electrode active material layer, and specifically, the content of the conductive material may be 0.5% by weight or more or 1% by weight or more, and may be 20% by weight or less or 30% by weight or less. If the content of the conductive material is too small, i.e., less than 0.5 % by weight, it is difficult to expect an effect of improving electrical conductivity or the electrochemical properties of the battery may be deteriorated. If the content of the conductive material exceeds 30% by weight and thus is too large, the amount of the positive electrode active material may be relatively small, so that the capacity and energy density may be lowered. A method for incorporating the conductive material to the positive electrode is not particularly limited, and a conventional method known in the art, such as coating on the positive electrode active material, may be used.

In addition, the positive electrode current collector supports the positive electrode active material layer, and serves to transfer electrons between the external conductive wire and the positive electrode active material layer.

The positive electrode current collector is not particularly limited as long as it has high electrical conductivity without causing chemical changes in the all-solid-state battery. For example, as the positive electrode current collector, copper, stainless steel, aluminum, nickel, titanium, palladium, sintered carbon; a copper or stainless steel surface-treated with carbon, nickel, silver, etc.; an aluminum-cadmium alloy, etc. may be used.

The positive electrode current collector may have a fine irregularity structure on the surface of the positive electrode current collector or have a three-dimensional porous structure, in order to strengthen the bonding force with the positive electrode active material layer. Accordingly, the positive electrode current collector may comprise various forms such as a film, a sheet, a foil, a mesh, a net, a porous body, a foam, and a non-woven fabric.

The positive electrode as described above may be prepared by the conventional method, and specifically, the positive electrode is manufactured by coating and drying a composition for forming the positive electrode active material layer prepared by mixing the positive electrode active material, the conductive material and the binder in an organic solvent, onto the positive electrode current collector, and optionally compression-molding it onto the current collector to improve the electrode density. At this time, as the organic solvent, it is preferable to use one that can uniformly disperse the positive electrode active material, the binder, and the conductive material and that evaporates easily. Specifically, acetonitrile, methanol, ethanol, tetrahydrofuran, water, isopropyl alcohol and the like are exemplified.

In the present invention, the negative electrode comprised in the all-solid-state battery comprises a negative electrode active material layer, and the negative electrode active material layer may be formed on one surface of the negative electrode current collector.

The negative electrode active material may be a material capable of reversibly intercalating or de-intercalating lithium ion (Li$^+$), a material capable of reacting with lithium ion to reversibly form a lithium-including compound, lithium metal or a lithium alloy.

The material capable of reversibly intercalating or de-intercalating lithium ion (Li$^+$) may be, for example, crystalline carbon, amorphous carbon or mixtures thereof. The material capable of reacting with the lithium ion (Li$^+$) to reversibly form a lithium-including compound may be, for example, tin oxide, titanium nitrate, or silicon. The lithium alloy may be, for example, an alloy of lithium (Li) and the metal selected from the group consisting of sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al), and tin (Sn).

Preferably, the negative electrode active material may be lithium metal, and specifically, may be in the form of a lithium metal thin film or lithium metal powder.

The negative electrode active material may be contained in an amount of 40 to 80% by weight based on the total weight of the negative electrode active material layer. Specifically, the content of the negative electrode active material may be 40 % by weight or more or 50 % by weight or more, and may be 70 % by weight or less or 80 % by weight or less. If the content of the negative electrode active material is less than 40% by weight, the connectivity between the wet negative electrode active material layer and the dry negative electrode active material layer may be insufficient. If the content of the negative electrode active material exceeds 80 % by weight, mass transfer resistance may be increased.

In addition, the binder is the same as described above for the positive electrode active material layer.

In addition, the conductive material is the same as described above for the positive electrode active material layer.

In addition, the negative electrode current collector is not particularly limited as long as it has conductivity without causing chemical change in the battery, and for example, the negative electrode current collector may be copper, stainless steel, aluminum, nickel, titanium, sintered carbon; copper or stainless steel surface-treated with carbon, nickel, titanium, silver, etc.; or aluminum-cadmium alloy. In addition, the negative electrode current collector may be used in various forms, such as a film having fine irregularity on its surface, a sheet, a foil, a net, a porous body, a foam, and a non-woven fabric, as in the positive electrode current collector.

The manufacturing method of the negative electrode is not particularly limited, and may be manufactured by forming a negative electrode active material layer on a negative electrode current collector using a layer or film formation method commonly used in the art. For example, a method such as pressing, coating, or vapor deposition may be used. Also, a case where a thin film of a metal lithium is formed on a metal plate by initial charging after assembling the battery without a lithium thin film on the negative electrode current collector is also included in the negative electrode of the present invention.

In addition, the present invention provides a battery module comprising the all-solid-state battery as a unit cell, a battery pack comprising the battery module, and a device comprising the battery pack as a power source.

In this case, examples of the above device may comprise, but are not limited to, a power tool powered by an electric motor; electric cars including an electric vehicle (EV), a hybrid electric vehicle (HEV), a plug-in hybrid electric vehicle (PHEV), and the like; electric motorcycles including an electric bike (E-bike) and an electric scooter (E-scooter); an electric golf cart; and a power storage system. Hereinafter, preferred examples are presented to aid understanding of the present invention, but the following examples are only illustrative of the present invention, and it will be apparent to those skilled in the art that various changes and modifications can be made within the scope and technical idea of the present invention, and also it is natural that such variations and modifications are within the scope of the appended claims.

Hereinafter, preferred examples are presented to aid understanding of the present invention, but the following examples are provided to help understand the present invention more easily, and the present invention is not limited thereto.

In the following Examples and Comparative Examples, a ceramic ion conductor including a polymer, a ceramic compound, etc. as shown in Table 1 below was prepared, and a composite solid electrolyte comprising the same was prepared.

Table 1:

| | Polyme r | Ceramic compound | Weight ratio of polymer and ceramic compound | Whether or not the freezing/thawing process is applied | Whether or not chemical crosslinking agent is added |
|---|---|---|---|---|---|
| Example 1 | PVA | LLZO | 1: 2 | applied | X |
| Example 2 | PVA | LSTP | 1: 2 | applied | X |
| Example 3 | PVA | LLZO | 1: 10 | applied | X |
| Example 4 | PVA | LLZO | 10: 1 | applied | X |
| Example 5 | PVA | LLZO | 1: 2 | non-applied | ○ |
| Example 6 | PVA | LLZO | 1: 10 | non-applied | ○ |
| Example 7 | PVA | LLZO | 10: 1 | non-applied | ○ |
| Comparati ve Example 1 | PVA | LLZO | 1 : 2 | non-applied (80 °C drying) | X |
| Comparati ve Example 2 | PEO | LLZO | 1 : 2 | applied | X |
| Comparati ve Example 3 | Poly(a crylic acid) | LLZO | 1 : 2 | applied | X |

**Example 1: Preparation of composite solid electrolyte**

**(1) Preparation of composite**

PVA (Mw: 89,000 g/mol; degree of hydrolysis: > 99%) was added to DI water and mixed to prepare a 10 wt% PVA aqueous solution. To the PVA aqueous solution, LLZO powder, which is a ceramic compound, was added to prepare a solution. At this time, the weight ratio of PVA and LLZO was set to 1: 2.

3 ml of the solution was poured into a Petri dish made of polycarbonate, and then, frozen at -20 °C for 24 hours and thawed at 25 °C to induce physical cross-linkage of the PVA, thereby preparing a hydrogel type composite.

**(2) Preparation of ceramic ion conductor**

The hydrogel composite was heated from room temperature to 800 °C at a rate of 1 °C/min and sintered at 800 °C for 2 hours to thermally decompose the PVA hydrogel and prepare a ceramic ion conductor formed by sintering the remaining LLZO particles.

**(3) Preparation of composite solid electrolyte**

A solution including PEO and LiTFSI was prepared (where the molar ratio ([Li]/[O]) of "O" included in PEO and "Li" included in lithium salt is 0.4), and the ceramic ion conductor was immersed in the prepared solution and dried to prepare a composite solid electrolyte.

**Example 2**

A composite solid electrolyte was prepared in the same manner as in Example 1, except that LSTP is used instead of LLZO, which is a ceramic compound.

**Example 3**

A composite solid electrolyte was prepared in the same manner as in Example 1, except that the weight ratio of the polymer (PVA) and the ceramic compound (LLZO) is 1: 10.

### Example 4

A composite solid electrolyte was prepared in the same manner as in Example 1, except that the weight ratio of the polymer (PVA) and the ceramic compound (LLZO) is 10: 1.

### Example 5

A composite solid electrolyte was prepared in the same manner as in Example 1, except that instead of the freezing and thawing processes, 0.1 ml of boric acid (1 wt% aqueous solution) as a chemical cross-linker is added to 20 ml of a solution including the PVA and ceramic compound, and stirred in a magnetic stirrer at 200 rpm/1 hour, thereby preparing a hydrogel-type composite by chemical cross-linkage.

### Example 6

A composite solid electrolyte was prepared in the same manner as in Example 5, except that the weight ratio of the polymer (PVA) and the ceramic compound (LLZO) is 1: 10.

### Example 7

A composite solid electrolyte was prepared in the same manner as in Example 5, except that the weight ratio of the polymer (PVA) and the ceramic compound (LLZO) is 10: 1.

### Comparative Example 1

A composite solid electrolyte was prepared in the same manner as in Example 1, except that a solution including PVA and LLZO is prepared, the solution is applied on a glass slide as a substrate, and then, instead of a freezing and thawing processes, it is dried at 80 °C for 12 hours.

### Comparative Example 2

A composite solid electrolyte was prepared in the same manner as in Example 1, except that instead of PVA, PEO (Mw: 4,000,000 g/mol) which is a polymer that does not have a cross-linkable functional group is used.

### Comparative Example 3

A composite solid electrolyte was prepared in the same manner as in Example 1, except that instead of polymer PVA, poly(acrylic acid) 35% aqueous solution (Mw: 100,000 g/mol) is used.

### Experimental Example

### Experimental Example 1

In order to measure the ionic conductivity of the composite solid electrolytes in the form of films prepared in the Examples and the Comparative Examples, the composite solid electrolyte was punched out in a circle with a size of 1.7671 $cm^2$, and the punched composite solid electrolyte was placed between two sheets of stainless steel (SS) to prepare a coin cell.

Using an electrochemical impedance spectrometer (electrochemical impedance spectrometer, EIS, VM3, Bio Logic Science Instrument), the resistance was measured under conditions of an amplitude of 10 mV and a scan range of 500 KHz to 20 MHz at 25 °C, and then, using Equation 1 below, the ionic conductivity of the composite solid electrolyte was calculated.

[Equation 1]

$$\sigma_i = \frac{L}{RA}$$

wherein, $\sigma_i$ is the ionic conductivity (S/cm) of the composite solid electrolyte, R is the resistance ($\Omega$) of the composite solid electrolyte measured by the electrochemical impedance spectrometer, L is the thickness of the composite solid electrolyte ($\mu$m), and A is the area of the composite solid electrolyte ($cm^2$).

The ionic conductivity of the composite solid electrolyte calculated using Equation 1, the possibility of forming a hydrogel, the possibility of forming a free-standing film, and the results of observing the appearance of the composite solid electrolyte are shown in Table 2 below. At this time, the possibility of forming the hydrogel (formation: O, non-formation: X), the possibility of forming the free-standing film (formation: ○, non-formation: X) and the appearance of the composite solid electrolyte were visually observed.

Table 2:

| | ionic conductivity (S/cm) | Possibility of forming the hydrogel | Possibility of forming the free-standing film | Remarks |
|---|---|---|---|---|
| **Example 1** | $2.1 \times 10^{-5}$ | ○ | ○ | |
| **Example 2** | $1.7 \times 10^{-5}$ | ○ | ○ | |
| **Example 3** | - | ○ | - | Impossible to prepare solution (aggregation of ceramic particles) |
| **Example 4** | - | ○ | - | Impossible to form ionic conductor after sintering |
| **Example 5** | $1.5 \times 10^{-5}$ | ○ | ○ | |
| **Example 6** | - | ○ | - | Impossible to prepare solution (aggregation of ceramic particles) |
| **Example 7** | - | ○ | - | Impossible to form ionic conductor after sintering |
| **Comparative Example 1** | not measurable | X | X | Formation of brittle film without cross-linking structure, Impossible to form ceramic ionic conductor after sintering |
| **Comparative Example 2** | not measurable | X | X | Impossible to form hydrogel after freezing/thawing |
| **Comparative Example 3** | not measurable | X | X | Impossible to form hydrogel after freezing/thawing |

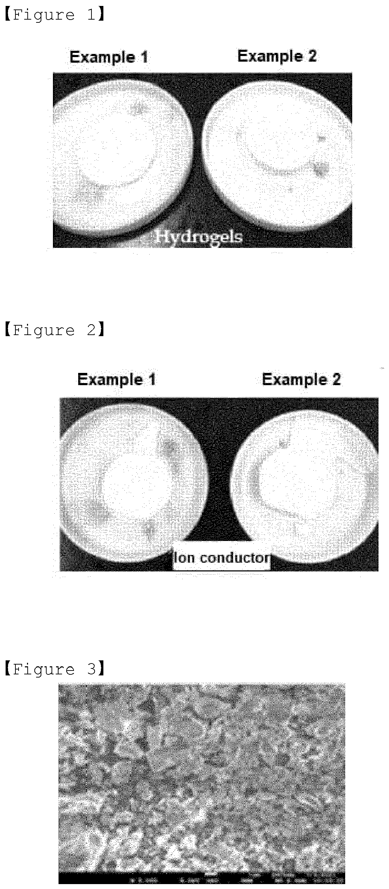

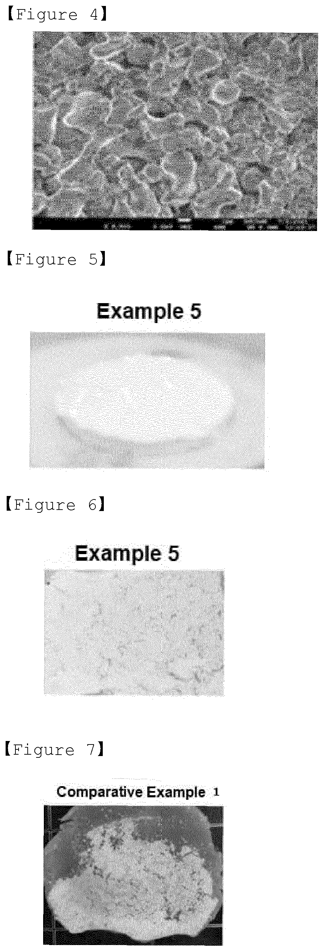

As shown in Table 2 above, it was confirmed that a hydrogel can be formed by applying a freezing and thawing process to a solution in which a polymer and a ceramic compound including the cross-linkable functional group are mixed in an appropriate range of weight ratio, and a composite solid electrolyte can be prepared by sintering the hydrogel to form a ceramic ion conductor (Examples 1 to 7 and FIGs. 1 to 6).

In Comparative Example 1, a brittle film with no cross-linked structure, which is an electrolyte prepared using a high-temperature drying process at 80 °C, was formed, and no ceramic ion conductor was formed after sintering.

In Comparative Examples 2 and 3, it was prepared using a polymer that did not contain a cross-linkable functional group, and no hydrogel of the polymer was formed.

In the above, although the present invention has been described by way of limited embodiments, the present invention is not limited thereto, and it is apparent to those skilled in the art that various modifications and variations can be made within the equivalent scope of the technical spirit of the present invention and the claims to be described below.

**Claims**

1. A method for preparing a composite solid electrolyte for a lithium secondary battery, comprising the steps of:

   (S1) preparing a first composite by forming a hydrogel of a first polymer from a solution including the first polymer including a cross-linkable functional group (side chain) and a ceramic compound;
   (S2) preparing a ceramic ion conductor by sintering the first composite; and
   (S3) preparing a second composite by immersing the ceramic ion conductor in a solution including the second polymer and a lithium salt and drying it.

2. The method for preparing the composite solid electrolyte for the lithium secondary battery according to claim 1, wherein the hydrogel of the first polymer comprises a cross-linked structure between the first polymer and the ceramic compound.

3. The method for preparing the composite solid electrolyte for the lithium secondary battery according to claim 2, wherein the cross-linked structure comprises (a) a cross-linkage between cross-linkable functional groups, and (b) a cross-linkage between a cross-linkable functional group and a ceramic compound.

4. The method for preparing the composite solid electrolyte for the lithium secondary battery according to claim 3, wherein the (a) cross-linkage between cross-linkable functional groups comprises a hydrogen bond, and the (b) cross-linkage between the cross-linkable functional group and the ceramic compound comprises a linkage by Lewis acid-base interaction.

5. The method for preparing the composite solid electrolyte for the lithium secondary battery according to claim 2, wherein the cross-linked structure is formed by freezing and thawing a solution including the first polymer and the ceramic compound.

6. The method for preparing the composite solid electrolyte for the lithium secondary battery according to claim 2, wherein the cross-linked structure is formed by adding a chemical cross-linker to the solution including the first polymer and the ceramic compound.

7. The method for preparing the composite solid electrolyte for the lithium secondary battery according to claim 5, wherein the freezing is performed at -30 °C to -10 °C.

8. The method for preparing the composite solid electrolyte for the lithium secondary battery according to claim 5, wherein the thawing is performed at 15 °C to 35 °C.

9. The method for preparing the composite solid electrolyte for the lithium secondary battery according to claim 1, wherein the cross-linkable functional group comprises at least one selected from the group consisting of a hydroxyl group, a carboxyl group, and an amide group.

10. The method for preparing the composite solid electrolyte for the lithium secondary battery according to claim 1, wherein the first polymer including the cross-linkable functional group comprises at least one selected from the group consisting of polyvinyl alcohol (PVA), gelatin, methylcellulose, agar, dextran, poly(vinyl pyrrolidone), poly(acryl amide), starch-carboxymethyl cellulose, hyaluronic acid-methylcellulose, chitosan, poly(N-isopropylacrylamide), and amino-terminated polyethylene glycol (amino-terminated PEG).

11. A composite solid electrolyte for a lithium secondary battery comprising a ceramic ion conductor including a ceramic compound; a second polymer; and a lithium salt.

12. The composite solid electrolyte for a lithium secondary battery according to claim 11, wherein the ceramic compound comprises at least one selected from the group consisting of lithium-lanthanum-zirconium oxide based (LLZO), lithium-silicon-titanium phosphate based (LSTP), lithium-lanthanum-titanium oxide based (LLTO), lithium-aluminum-titanium phosphate based (LATP), lithium-aluminum-germanium phosphate based (LAGP) and lithium-lanthanum-zirconium-titanium oxide based (LLZTO) compounds.

13. The composite solid electrolyte for a lithium secondary battery according to claim 11, wherein the second polymer comprises at least one selected from the group consisting of polyvinyl alcohol (PVA), polyethylene oxide (PEO), polyacrylate, poly(methyl methacrylate) (PMMA), PSTFSI, polyurethane, nylon, poly(dimethylsiloxane), gelatin, methylcellulose, agar, dextran, poly(vinyl pyrrolidone), poly(acryl amide), poly(acrylic acid), starch-carboxymethyl cellulose, hyaluronic acid-methylcellulose, chitosan, poly(N-isopropylacrylamide) and amino-terminated polyethylene glycol (amino-terminated PEG).

14. The composite solid electrolyte for a lithium secondary battery according to claim 11, wherein the lithium salt comprises at least one selected from the group consisting of $(CF_3SO_2)_2NLi$ (Lithium bis(trifluoromethanesulphonyl)imide, LiTFSI), $(FSO_2)_2NLi$ (Lithium bis(fluorosulfonyl)imide, LiFSI), $LiNO_3$, LiOH, LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $CF_3SO_3Li$, LiSCN and $LiC(CF_3SO_2)_3$.

15. The composite solid electrolyte for a lithium secondary battery according to claim 11, wherein the molar ratio of lithium ([Li]) in the lithium salt to the molar concentration ([G]) of the second polymer is 0.1 to 0.5.

16. The composite solid electrolyte for a lithium secondary battery according to claim 11, wherein the composite solid electrolyte is in the form of a free-standing film.

17. The composite solid electrolyte for a lithium secondary battery according to claim 11, wherein the ionic conductivity of the composite solid electrolyte is $1.0 \times 10^{-5}$ S/cm or more.

18. An all-solid-state battery comprising the composite solid electrolyte for a lithium secondary battery according to any of claims 11 to 17.

【Figure 1】

【Figure 2】

【Figure 3】

【Figure 4】

【Figure 5】

**Example 5**

【Figure 6】

**Example 5**

【Figure 7】

Comparative Example 1

<div align="center">**INTERNATIONAL SEARCH REPORT**</div>

| | International application No. |
|---|---|
| | **PCT/KR2023/007474** |

**A. CLASSIFICATION OF SUBJECT MATTER**

**H01M 10/056**(2010.01)i; **H01M 10/052**(2010.01)i

According to International Patent Classification (IPC) or to both national classification and IPC

**B. FIELDS SEARCHED**

Minimum documentation searched (classification system followed by classification symbols)

H01M 10/056(2010.01); C04B 38/00(2006.01); H01B 1/06(2006.01); H01B 1/10(2006.01); H01M 10/052(2010.01); H01M 10/0562(2010.01); H01M 10/0585(2010.01); H01M 10/36(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 세라믹(ceramic), 고분자 소결(polymer sintering), 동결-해동 고분자(freeze-thaw polymer), 고체 전해질(solid electrolyte)

**C. DOCUMENTS CONSIDERED TO BE RELEVANT**

| Category* | Citation of document, with indication, where appropriate, of the relevant passages | Relevant to claim No. |
|---|---|---|
| A | KR 10-2017-0092262 A (KOREA INSTITUTE OF INDUSTRIAL TECHNOLOGY) 11 August 2017 (2017-08-11)<br>See claims 1 and 11. | 1-17 |
| A | JP 2008-201636 A (NATIONAL INSTITUTE OF ADVANCED INDUSTRIAL & TECHNOLOGY) 04 September 2008 (2008-09-04)<br>See entire document. | 1-17 |
| A | JP 2019-114499 A (FDK CORP.) 11 July 2019 (2019-07-11)<br>See entire document. | 1-17 |
| A | JP 2018-107095 A (INDUSTRIAL TECHNOLOGY RESEARCH INSTITUTE) 05 July 2018 (2018-07-05)<br>See entire document. | 1-17 |
| A | JP 2009-238739 A (TOKYO METROPOLITAN UNIV. et al.) 15 October 2009 (2009-10-15)<br>See entire document. | 1-17 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **05 September 2023** | **05 September 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
|---|
| **PCT/KR2023/007474** |

**Box No. II        Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☑ Claims Nos.: **18**
   because they are dependent claims and are not drafted in accordance with the second and third sentences of Rule 6.4(a).

Form PCT/ISA/210 (continuation of first sheet) (July 2022)

**INTERNATIONAL SEARCH REPORT**
Information on patent family members

International application No.

**PCT/KR2023/007474**

| Patent document cited in search report | | | Publication date (day/month/year) | Patent family member(s) | | | Publication date (day/month/year) |
|---|---|---|---|---|---|---|---|
| KR | 10-2017-0092262 | A | 11 August 2017 | JP | 2019-505074 | A | 21 February 2019 |
| | | | | JP | 6652752 | B2 | 26 February 2020 |
| | | | | KR | 10-1793168 | B1 | 20 November 2017 |
| | | | | US | 10886560 | B2 | 05 January 2021 |
| | | | | US | 2019-0051934 | A1 | 14 February 2019 |
| | | | | WO | 2017-135553 | A1 | 10 August 2017 |
| | | | | WO | 2017-135553 | A8 | 24 January 2019 |
| JP | 2008-201636 | A | 04 September 2008 | EP | 2133317 | A1 | 16 December 2009 |
| | | | | JP | 5176198 | B2 | 03 April 2013 |
| | | | | US | 2010-0099547 | A1 | 22 April 2010 |
| | | | | US | 8262957 | B2 | 11 September 2012 |
| | | | | WO | 2008-102801 | A1 | 28 August 2008 |
| JP | 2019-114499 | A | 11 July 2019 | | None | | |
| JP | 2018-107095 | A | 05 July 2018 | CN | 108242562 | A | 03 July 2018 |
| | | | | CN | 108242562 | B | 28 August 2020 |
| | | | | JP | 6474382 | B2 | 27 February 2019 |
| | | | | TW | 201824626 | A | 01 July 2018 |
| | | | | TW | I630743 | B | 21 July 2018 |
| | | | | US | 2018-0183090 | A1 | 28 June 2018 |
| JP | 2009-238739 | A | 15 October 2009 | EP | 2099086 | A1 | 09 September 2009 |
| | | | | EP | 2099086 | B1 | 19 December 2012 |
| | | | | JP | 5376364 | B2 | 25 December 2013 |
| | | | | US | 2009-0226790 | A1 | 10 September 2009 |
| | | | | US | 8309257 | B2 | 13 November 2012 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220067013
- KR 1020230070195
- KR 1020170045011